# EUROPEAN PATENT SPECIFICATION

(11) **EP 3 538 595 B1**
(45) Date of publication and mention of the grant of the patent: **25.05.2022**
(21) Application number: 17866390.2
(22) Date of filing: 07.11.2017
(51) Int. Cl.: C08J 11/08, C08L 23/06

(54) **METHOD FOR SEPARATING AND RECOVERING POLYETHYLENE AND ALUMINIUM FROM A POLYLAMINATED MATERIAL**
VERFAHREN ZUM TRENNEN UND RÜCKGEWINNEN VON POLYETHYLEN UND ALUMINIUM AUS EINEM POLYAMINIERTEN MATERIAL
PROCÉDÉ DE SÉPARATION ET DE RÉCUPÉRATION DE POLYÉTHYLÈNE ET D'ALUMINIUM D'UN MATÉRIAU POLYLAMINÉ

(30) Priority: 14.11.2016 IT 201600114545
(43) Date of publication of application: 18.09.2019
(73) Proprietor: Alma Mater Studiorum - Università di Bologna, 40126 Bologna (IT)
(72) Inventor: TAGLIAVINI, Emilio, 40123 Bologna (IT); GALLETTI, Paola, 48122 Marina di Ravenna (Ravenna) (IT); SAMORI', Chiara, 48123 Ravenna (IT); MALFERRARI, Danilo, 40139 Bologna (IT)
(74) Representative: Crugnola, Pietro
(86) International application number: PCT/IB2017/056941
(87) International publication number: WO 2018/087653

(56) References cited:
- WO-A1-2011/050469
- CN-A- 101 475 701
- ES-A1- 2 087 013

## Description

The invention relates to a method for separating and recovering polyethylene - in particular low density polyethylene (LDPE) - and aluminium (Al) from waste of a polylaminated material, in particular a polylaminated material that was previously used as food packaging.

Aseptic packaging consisting of polylaminated materials is known and widely used, for example in the food industry. Known polylaminated materials consist of a plurality of laminated layers comprising paper (75%), aluminium (5%) and low density polyethylene or LDPE (20%). The paper component consists of long cellulose fibres that make the polylaminated material substantially stiff, whereas LDPE and aluminium act as barrier layers. In particular, the aluminium prevents atmospheric oxygen and light from traversing the packaging wall, thus avoiding undesired oxidation and/or photo-oxidation in the food product contained therein, whereas the LDPE makes the packaging impermeable to water and prevents the aluminium from coming into contact with the food product.

Given the increasing use of the aforesaid packaging, in solid urban waste the fraction consisting of polylaminated materials has consequently increased and the recyclability of the latter has become an environmental and socioeconomic problem.

Methods are known for recycling the polylaminated materials, in which the paper fibres are recovered by treating the polylaminated material with hot water. The remaining fraction - consisting of unseparated LDPE and aluminium - can be treated by agglutination and extrusion so as to obtain a composite material, which can be used, for example, to manufacture pellets by injection moulding, but is more often disposed of in landfill. A drawback of the method disclosed above consists of the difficulty of separating the aluminium from the LDPE, which contrasts with the much more advantageous and eco-sustainable objective of recovering and reusing separately the aforesaid components. In order to try to overcome this drawback, various methods have been developed, both at the laboratory and pilot plant level, for separating and recovering the LDPE and the aluminium comprised in the polylaminated materials. These methods can be divided into thermal, mechanical and chemical methods.

The known thermal methods comprise, for example, incineration, plasma torch technology (Neves, F. L. "O Papel" 1999, 61:38-41) or pyrolysis (A. Korkmaz, J. Yanik, M. Brebu, C. Vasile, Waste Management, 2009; 29, 2836; J. Haydary, D. Susa, J. Dudáš, Waste Management, 2013, 33, 1136), all aiming to recover only the aluminium and produce energy. A drawback of the aforesaid thermal methods, in addition to the missed recovery of LDPE, consists of the fact that the quality of the treatment can be invalidated by the formation of a high percentage of aluminium oxide and pyrolysis residues.

The known mechanical methods are mainly based on a procedure of exfoliation of the polylaminated material, in which aqueous mixtures of surfactants and hydrotropic substances are used (US2013319618A1; WO 2015169801A1), organic solvents (S. Zhang, K. Luo, L. Zhang, X. Mei, S. Cao, B. Wang, J. Chem. Technol. Biotechnol., 2015, 90, 1152) or acid solutions (M. Xie, Q. Qiao, Q. Sun, L. Zhang, Int. J. Life Cycle Asses., 2013, 18, 626; D. Yan, Z. Peng, Y. Liu, Q. Huang, M. Xie, Q. Wang, Waste Management, 2015, 35, 21). A drawback of the aforesaid mechanical methods consists of the fact that they are substantially complex and costly.

In the known chemical methods, the LDPE is solubilized with organic solvents and the aluminium is precipitated, with subsequent separations and recovery of the LDPE by evaporation of the solvent or by adding an anti-solvent. A drawback of the known chemical methods is that the latter are based on the use of solvents, few of which - for example toluene and xylenes - are able to dissolve effectively the LDPE. As the use of organic solvents like toluene and xylenes generates clear and significant problems of environmental sustainability, it has been tried to remedy by using solvents of vegetable origin, i.e. vegetable oils (J.E. Rodriguez-Gomez, Y.Q. Silva-Reynoso, V. Varela-Guerrero, A. Núñez-Pineda, C.E. Barrera-Díaz, Fuel, 2015, 149, 90). Nevertheless, also the use of vegetable oils as solvents generates substantial problems of environmental sustainability, as the use is anyway necessary of organic solvents - for example chloroform or alcohols - to remove the oily residues from LDPE and aluminium, after the latter have been separated and recovered. Further, the quality and the degree of purity of the recovered materials (aluminium and LDPE) greatly influences the commercial value thereof and this applies above all to chemical processes, for which the reaction conditions can worsen the ability of the LDPE to be subjected to extrusion or the quality of the particles (flakes) of aluminium.

CN101475701A discloses a method for bubble-aided quick peeling off of aluminum plastic composite materials. The method comprises: crushing the aluminum plastic composite material into pieces and placing the pieces in a separating agent; introducing gas into every litre of the separating agent at a flow speed of 50 to 500 ml/min and heating at 80°C to 90°C; keeping the temperature for 10 to 40 min to completely separate aluminum from plastic; then, respectively obtaining aluminum and plastic through filtration, floatation separation and drying. The gas is inert relative to the separating agent and the separating agent comprises the following components in percentage by weight: 10 - 99.9 % of organic carboxylic acid, 0.1 - 1 % of surfactant and the balance being water.

To sum up, it can be affirmed that the known methods have the following drawbacks:
- Missed or incomplete separation of aluminium and polyethylene;
- High oxidation of the recovered aluminium, which is of poor quality and is thus of poor value;
- Problems of environmental sustainability connected to the use of organic solvents to be recycled, with high energy consumption and consequent rise of costs.

An object of the invention is to improve the known methods for separating and recovering low density polyethylene and aluminium from a polylaminated material.

Another object is to make available a method for separating and recovering low density polyethylene and aluminium from a polylaminated material, which method enables aluminium and polyethylene to be separated in an optimum manner from polylaminated material.

A further object is to make available a method for separating and recovering low density polyethylene and aluminium from a polylaminated material, which method enables substantially non-oxidized aluminium to be recovered.

Still another object is to make available a method for separating and recovering low density polyethylene and aluminium from a polylaminated material, which method enables the use of organic solvents to be recycled by distillation and the consequent great consumption of energy and money to be avoided.

According to the invention, a method is provided for separating and recovering low density polyethylene and aluminium from a polylaminated material, as defined in claim 1. Owing to the method according to the invention, it is possible to overcome the drawbacks of the prior art highlighted above. In fact, the method according to the invention enables both the components of interest (Al and LDPE) to be separated and recovered (from the polylaminated material) with good yield and good properties of the recovered materials. In order to implement the method according to the invention, a closed cycle of chemical and chemical-physical transformations is run, which transformations require treatment conditions that are scarcely aggressive and are conducted in low pressures and temperatures conditions. Moreover, the aforesaid closed cycle enables the reagents to be recovered easily and cheaply.

The invention can be better understood and implemented with reference to the attached drawings that illustrate an embodiment thereof by way of non-limiting example, in which:
Figure 1 shows schematically a cycle of chemical and chemical-physical transformations that is comprised in the method according to the invention;
Figure 2 is a photograph showing a fragment of polylaminated material consisting of low density polyethylene and aluminium;
Figure 3 is a photograph showing a first step of the cycle of transformations of Figure 1, in which the low density polyethylene is solubilized in a solvent medium and separated from the aluminium;
Figure 4 is a photograph showing fragments of aluminium removed from the solvent medium at the end of the first step of Figure 3;
Figure 5 is a photograph showing the low density polyethylene solubilized in the solvent medium after the removal of the aluminium from the mixture (consisting of the solvent medium and the low density polyethylene);
Figure 6 is a photograph showing a second step of the transformation cycle of Figure 1, showing the low density polyethylene that is separated and floats on the surface of the solvent;
Figure 7 is a photograph showing the low density polyethylene separated and removed from the mixture;
Figure 8 is a graph, showing FTIR-ATR spectra obtained from samples of aluminium separated from a polylaminated material through the method according to the invention.
Figure 9 is a graph, showing a comparison between the thermogravimetric profile of standard low density polyethylene and the thermogravimetric profile of low density polyethylene separated from a polylaminated material through the method according to the invention.

The Inventors have devised a method of extraction by solvents, which is based on the use of so-called solvents having a polarity that can be modulated or SHS ("switchable hydrophilicity solvents") and enables LDPE and aluminium to be separated from crumbled residues of a polylaminated material, after the paper layer has already been removed (using known procedures, for example treatment in hot water) from the polylaminated material. The method according to the invention has been successfully experimented, enabling LDPE and aluminium to be recovered in large quantities (> 99% for aluminium and > 80% for the polyethylene) and good quality (≥ 86% of non-oxidized aluminium). The method can of course also be applied to a material originally consisting only of LDPE and aluminium.

The SHS are peculiar solvents that can modify reversibly the polarity thereof by adding and removing CO₂ in the presence of water or an alcohol, moving from a neutral form (secondary or tertiary amine) to an ionic form (dialkyl- or trialkyl-ammonium hydrogen carbonate, if water is added, or dialkyl- or trialkyl-ammonium carbamate, if an alcohol is added). In other words, the SHS are solvents that are able to pass reversibly from an apolar and hydrophobic form to a polar and hydrophilic form. This change in polarity modulated by the CO₂ enables the SHS to be separated from the extracted substances at the end of the extraction process without consuming the energy required by the known evaporation procedures. In particular, the Inventors have concentrated their experimental activity on the use of the tertiary amine N,N-dimethylcyclohexylamine (DMCHA), having a low solubility in water. DMCHA has the following structural formula:

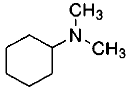

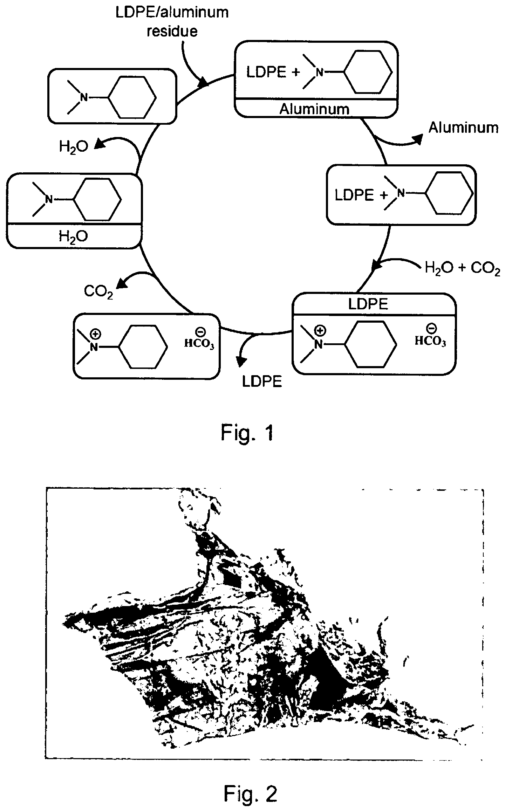

In the context of the present description, of the attached claims and the Figures, the terms "aluminium", "low density polyethylene" and "N,N- dimethylcyclohexylamine" can be used interchangeably with the respective abbreviations "Al", "LDPE" and "DMCHA". The method according to the invention is based on a cycle of chemical and chemical-physical transformations (extraction cycle), illustrated schematically in Figure 1 and comprising three main steps.

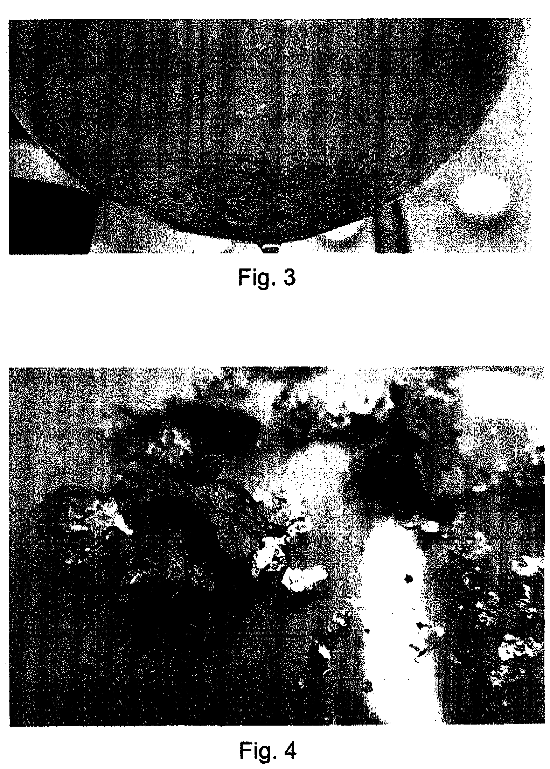

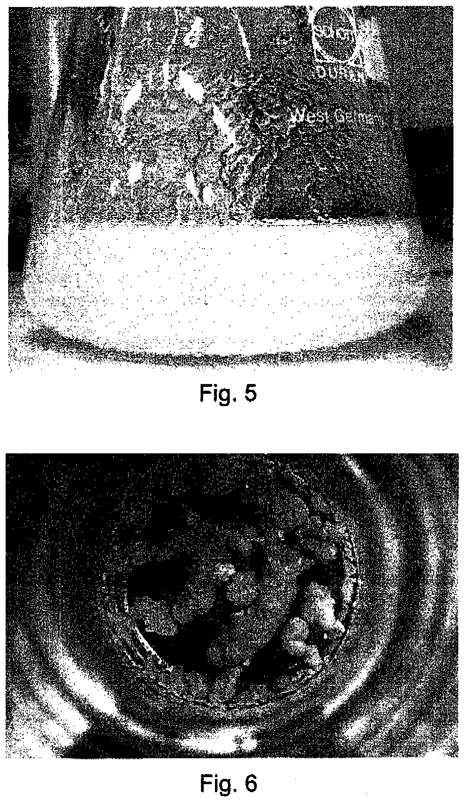

In a first step, a polylaminated material, reduced mechanically into fragments and devoid of the paper component (Figure 2) is placed in a liquid medium (contained in a suitable container, for example a glass flask), which is constituted by DMCHA in neutral form. The neutral DMCHA has a low polarity, which is suitable for solubilizing the LDPE at a moderate temperature, comprised between 90°C and 110°C, and thus for separating the LDPE from the fragments of aluminium. The latter are deposited by gravity on the bottom of the container (Figure 3) and can be removed by decanting or filtering from the extraction medium. Therefore, at the end of the first step aluminium (Figure 4), separated from the LDPE, and a solution of LDPE in DMCHA (Figure 5) are obtained. The separated aluminium is washed with little mildly acid H₂O (i.e. water that is acidified by bubbling CO₂ therein until pH 5 is reached), in order to eliminate the residues of DMCHA.

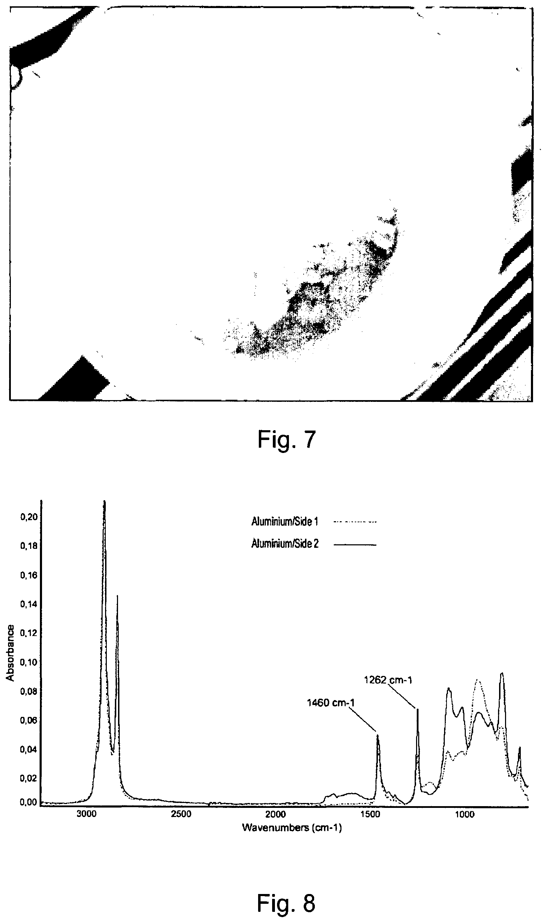

In a second step, H₂O is added (DMCHA / H₂O volume ratio of 1/1 or 2/1) to the extraction medium and CO₂ is bubbled into the latter. In this manner, the DMCHA is transformed into a corresponding ammonium salt DMCHAH⁺HCO₃⁻ (thus a solution of ammonium hydrogen carbonate salt is formed), the great polarity of which enables the LDPE to be separated from the extraction medium, i.e. from the solvent. The separated LDPE floats on the surface of the solvent (Figure 6) and is recovered by filtration (Figure 7, showing the LDPE after filtration). The separated LDPE is then washed with the same acid H₂O used to wash the separated aluminium.

In a third step, the CO₂ is removed from the extraction medium and DMCHA in neutral form is consequently regenerated, which DMCHA, being scarcely mixable with water, forms a separate phase. The DMCHA can be recovered and used to perform a new extraction cycle, in which LDPE and aluminium are separated and recovered from fragments of polylaminated material. The ammonium salt DMCHAH⁺HCO₃⁻ is converted into neutral DMCHA by heating to 40°C and stirring the extraction medium, i.e. the aqueous solution (procedure disclosed in: P. G. Jessop, L. Kozycz, Z. Ghoshouni Rahami, D. Schoenmakers, A. R. Boyd, D. Wechsler, A. M. Holland, *Green Chem*., 2011, 13, 619). In the third step disclosed above, the temperature can be comprised between 40°C and 50°C.

The method according to the invention can therefore be so disclosed concisely:
1) A polylaminated material is brought into contact with a liquid extraction medium, comprising a solvent that is able to reversibly pass from a polar and hydrophilic form to an apolar and hydrophobic form (for example, DMCHA); the solvent is initially in the apolar and hydrophobic form (for example, DMCHA in neutral form) and is thus able to solubilize the low density polyethylene in the liquid extraction medium, so as to separate the low density polyethylene and the aluminium from one another;
2) Subsequently, the polarity of the solvent is modified to cause the latter to move from the apolar and hydrophobic form to the polar and hydrophilic form (for example, ammonium salt DMCHAH⁺HCO₃⁻), so as to separate the low density polyethylene from the liquid extraction medium;
3) Lastly, the polarity of the solvent is again modified to bring back the solvent to the apolar and hydrophobic form (for example, DMCHA in neutral form), so as to be able to use the solvent again in a new extraction process.

The Inventors have tested different values of some parameters (temperature in °C; weight % ratio between residues of treated polylaminated material and used DMCHA; DMCHA/H₂O volume ratio) and the corresponding % recovery of LDPE and aluminium. The results are set out in Table 1 below (in which "a.t." stands for "ambient temperature"):

**Table 1**

| Residue/DMCHA (Weight %) | T (°C) | % Recovery Aluminium | % Recovery LDPE | DMCHA/H₂O Volume ratio |
|---|---|---|---|---|
| 2.5 | a.t. | - | - | 2/1 |
| 2.5 | 50 | - | - | 2/1 |
| 2.5 | 90 | >99 | 85 | 2/1 |
| 5 | 90 | >99 | 77 | 2/1 |
| 10 | 90 | >99 | 83 | 2/1 |

The initial quantity of aluminium in the treated residues was 25.3 ± 0.3 % in weight (value determined by calcination at 550°C for 5 h), thus the quantity of LDPE (75 % in weight) was calculated by the difference from the quantity of aluminium.

The solubilisation of the LDPE did not occur below 90° C, temperature at which it was possible to recover the film of aluminium quantitatively with all the tested ratios (residue/DMCHA).

The percentage of metal aluminium in the recovered material - a critical parameter for determining the commercial value thereof after a process of industrial recast - was 86%. This high value has confirmed the non-oxidizing behaviour of the DMCHA in the method according to the invention.

With regard to the percentage recovery of LDPE, the latter was about 80% by washing the LDPE with the same acid H₂O used for washing the aluminium.

The quantity of recovered DMCHA at the end of the extraction cycle was 80%. The possible complete recovery of the amine can be obtained by adding KOH. The recovered DMCHA did not contain detectable impurities (control carried out through ¹H NMR spectroscopy) and is therefore reusable without further purification for a subsequent extraction cycle.

By way of non-limiting example, a procedure for separating and recovering aluminium and LDPE from a polylaminated material using the method according to the invention (Example 1) and an analysis of the properties and of the degree of contamination in samples of aluminium and LDPE separated from a polylaminated material through the method according to the invention (Example 2) are disclosed below.

### Example 1 - Procedure for separating aluminium and LDPE from a polylaminated material using the method according to the invention

### 1.1 Materials and reagents

All the solvents and chemicals have been obtained from Sigma-Aldrich (≥ 98% purities) and have been used without purification.

### 1.2 Extraction procedure

1g of "non-paper" (i.e. deprived beforehand of the paper component of the polylaminated material) polylaminated residue (polylaminated material) was cut into small pieces (squares measuring 1 cm per side) and loaded into a round bottom flask. DMCHA (40, 20 or 10 mL, respectively corresponding to a residue/DMCHA ratio of 2.5 % in weight, 5 % in weight and 10 % in weight) was added. The mixture was heated to 90°C for 2 h, so as to solubilize the LDPE and separate the LDPE and DMCHA solution from the aluminium. The aluminium was washed with 5 mL of acid water (obtained by bubbling CO₂ into water until pH 5 was obtained) in order to remove the traces of DMCHA. The LDPE and DMCHA solution was added to a double volume of H₂O and CO₂ and CO₂ was bubbled into the resulting mixture for 1 h. In order to intensify the step of modifying the polarity of the DMCHA and the consequent separation of the LDPE from the solvent, the round bottom flask was placed in an ice bath (at a temperature comprised between 1°C and 2°C) and stirred energetically. The LDPE separated from the solvent was recovered from the extraction medium by vacuum filtration and washed with the same acid water used to wash the separated aluminium. At the end, the CO₂ is removed by stirring and heating the residual solvent to 40°C overnight, so as to regenerate the DMCHA in neutral form.

### Example 2 -Analysis of the properties and of the degree of contamination in samples of aluminium and LDPE separated from polylaminated material through the method according to the invention

### 2.1 Analytical methods and instruments

Samples of aluminium and LDPE, separated and recovered from a polylaminated material through the procedure disclosed in Example 1, have been subjected to elementary analysis by applying the instantaneous combustion technique and using a Flash 2000 model (Thermo Scientific) organic elemental analyzer. The quantity of aluminium in the residues (devoid of paper component) was determined by calcination at 550°C for 5 h and the quantity of LDPE was calculated by difference. The samples were examined through scanning electron microscopy (SEM), using a Philips XL20 electronic microscope. FTIR-ATR (Fourier-transform infrared spectrophotometry in attenuated total reflectance) spectra of the samples were recorded, using a Nicolet iN10.Mx infrared spectrophotometer with Germanium crystal. The quantity of metal oxides in the recovered aluminium has been determined through a microwave-assisted acid digestion with HCl, carried out according to the ISO/DIS 14869-3 protocol, and analyzed through inductively coupled plasma-optical emission spectrometry (ICP-OES), carried out according to ISO 11885:2007 protocol. The purity of the DMCHA was further analyzed after a cycle of modification of the polarity through ¹H NMR spectroscopy, by using a 5 mm probe in a VARIAN Mercury 400 spectrometer in CDCl₃ (deuterated chloroform).

### 2.2 Results

Each of the pieces of recovered aluminium had two faces that were different from one another, one shinier and the other more opaque, and in the latter a residual layer of LDPE was clearly visible. On both the faces (shown as "side 1" and "side 2" in Figure 8) LDPE residues were anyway present. In fact, in the FTIR-ATR spectra (Figure 8) the bands related to the symmetrical and asymmetrical CH₂ stretching (bond stretching) modes (2916 cm⁻¹ and 2847 cm⁻¹), as well as the CH₂ bending (bending of the bond angle) and rocking (rocking of the bond) modes, respectively to about 1460 cm⁻¹ and 725 cm⁻¹, are clearly visible.

Table 2 (set out below) shows the degree of contamination detected in the aluminium and LDPE samples (N and C determined by elementary analysis):

**Table 2**

| Residue/DMCHA (Weight %) | N in LDPE (%) | DMCHA in LDPE (Weight %) | C in aluminium (%) | LDPE in aluminium (Weight %) |
|---|---|---|---|---|
| 2.5 | 0.12±0.04 | 1.1 | 2.4±0.3 | 2.8 |
| 2.5^{∗} | 0.14±0.05 | 1.3 | 2.4±0.6 | - |
| 5 | 0.13±0.05 | 1.2 | 4.5±0.3 | 5.2 |
| 10 | 0.40±0.01 | 3.9 | 7.0±0.2 | 8.1 |

| | | | | |
|---|---|---|---|---|
| (^{∗}DMCHA / H₂O volume ratio: 1/1) | | | | |

As shown in the Table 2, the contamination by LDPE in the pieces of recovered aluminium decreased with the increase in the quantity of DMCHA relative to the LDPE-aluminium residue treated with the method according to the invention. The aluminium recovered through a more diluted extraction system (2.5 % in weight) contained the lowest residual quantity of LDPE (lower than 3%), about three times less than the quantity of LDPE contained in the aluminium recovered through a more concentrated extraction system (10 % in weight).

With regard to a possible contamination by DMCHA, no traces of N were detected in the recovered aluminium, which confirms that washing with acid H₂O effectively removed the traces of ammonium salt of the DMCHA.

The contamination by DMCHA in LDPE, calculated on the basis of the quantity of N detected in the recovered LDPE, was rather low (about 1% in weight). The maximum quantity of DMCHA (about 4% in weight) was detected when the DMCHA/H₂O volume ratio was 1/1, which indicates that the use of a double volume of H₂O has improved the recovered material quantitatively and qualitatively.

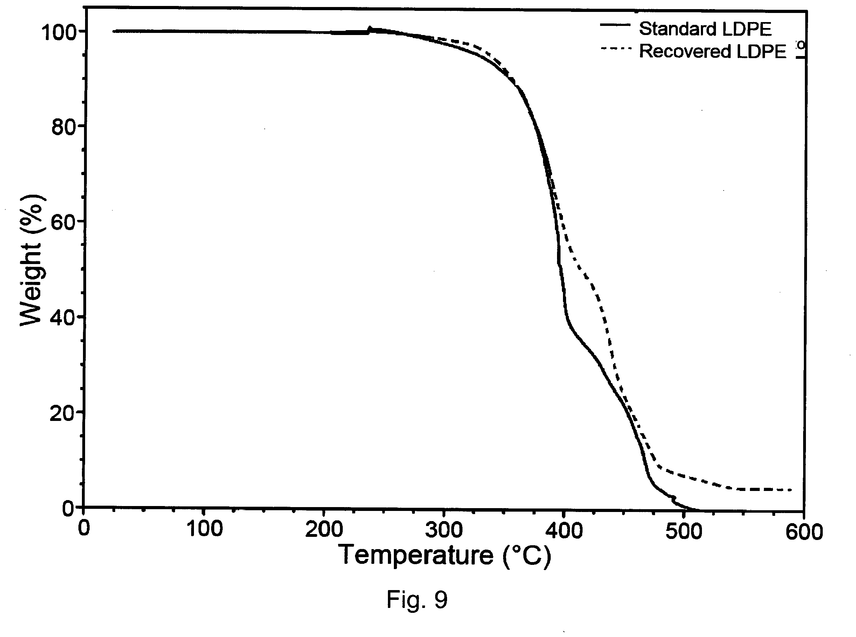

The recovered LDPE had thermogravimetric properties similar to those of polymers of standard LDPE when subjected to thermal degradation in the air (Figure 9). The weight of the recovered LDPE was stable up to 250°C (weight losses less than 0.1%) and at the end of the thermogravimetric analysis (TGA) a 4.5% solid residue was obtained. This finding can confirm that the treatment with DMCHA in the method according to the invention does not alter the quality of the recovered aluminium and LDPE.

## Claims

1. Method for separating and recovering low density polyethylene and aluminium from a polylaminated material, comprising the following step:
- Removing a paper layer from said polylaminated material;
- Putting said polylaminated material into contact with a liquid extraction medium comprising a solvent that is able to reversibly pass from a polar and hydrophilic form to an apolar and hydrophobic form, wherein said solvent is N,N-dimethylcyclohexylamine, said solvent being initially in said apolar and hydrophobic form and being able to solubilize said low density polyethylene in said liquid extraction medium, so as to separate said low density polyethylene and said aluminium one from the other;
- Modifying the polarity of said solvent to cause said solvent to pass from said apolar and hydrophobic form to said polar and hydrophilic form, so as to separate said low density polyethylene from said liquid extraction medium and enable said low density polyethylene to be removed from said liquid extraction medium, wherein said modifying the polarity of said solvent comprises adding H₂O and bubbling CO₂ into said liquid extraction medium.

2. Method according to claim 1, comprising, after separating and removing said low density polyethylene from said liquid extraction medium, modifying again the polarity of said solvent to cause said solvent to pass again from said polar and hydrophilic form to said apolar and hydrophobic form, so as to make said solvent usable again for separating low density polyethylene and aluminium from a polylaminated material, wherein said modifying again the polarity of said solvent comprises subjecting said liquid extraction medium to stirring and heating.

3. Method according to claim 1, or 2, comprising removing said separated aluminium and said separated low density polyethylene from said liquid extraction medium.

4. Method according to claim 3, wherein said removing said separated low density polyethylene comprises filtering said liquid extraction medium.

5. Method according to any one of claims 1 to 4, comprising heating said liquid extraction medium in order to solubilize said low density polyethylene.

6. Method according to claim 5, wherein said heating is carried out at a temperature that is comprised between 90°C and 110°C.

7. Method according to claim 5, or 6, wherein said heating continues for 2 h.

8. Method according to any one of claims 1 to 7, wherein said bubbling CO₂ continues for 1 h.

9. Method according any one of claims 1 to 8, wherein said adding H₂O is carried out so that the volume ratio between said N,N-dimethylcyclohexylamine and said H₂O is 2/1.

10. Method according to any one of claims 3 to 9, comprising washing said separated aluminium with acid H₂O to remove residues of said solvent.

11. Method according to any one of claims 3 to 10, comprising washing said separated low density polyethylene with acid H₂O to remove residues of said solvent.

12. Method according to claim 10, or 11, comprising preparing said acid H₂O by bubbling CO₂ into H₂O until pH 5 is reached.

13. Method according to any one of claims 1 to 12, wherein said modifying the polarity of said solvent comprises subjecting said liquid extraction medium to stirring at low temperature, said low temperature being comprised between 1°C and 2°C.

14. Method according to claim 2, or according to any one of claims 3 to 13 as appended to claim 2, wherein, in said modifying again said polarity, said heating is carried out at a temperature that is comprised between 40°C and 50°C.

15. Method according to any preceding claim, comprising reducing to fragments said polylaminated material before said putting into contact with a liquid extraction medium.

## Patentansprüche

1. Verfahren zum Abtrennen und Rückgewinnen von Polyethylen niedriger Dichte und Aluminium aus einem polylaminierten Material, umfassend die folgenden Schritte:
- Entfernen einer Papierschicht von dem polylaminierten Material;
- Inkontaktbringen des polylaminierten Materials mit einem flüssigen Extraktionsmedium, das ein Lösungsmittel aufweist, das reversibel von einer polaren und hydrophilen Form in eine apolare und hydrophobe Form übergehen kann, wobei es sich bei dem Lösungsmittel um N,N-Dimethylcyclohexylamin handelt, wobei das Lösungsmittel anfänglich in der apolaren und hydrophoben Form vorliegt und in der Lage ist, das Polyethylen niedriger Dichte in dem flüssigen Extraktionsmedium aufzuschließen, um so das Polyethylen niedriger Dichte und das Aluminium voneinander zu trennen;
- Modifizieren der Polarität des Lösungsmittels, um zu bewirken, dass das Lösungsmittel von der apolaren und hydrophoben Form in die polare und hydrophile Form übergeht, um so das Polyethylen niedriger Dichte von dem flüssigen Extraktionsmedium zu trennen und das Polyethylen niedriger Dichte von dem flüssigen Extraktionsmedium zu trennen und die Entfernung des Polyethylens niedriger Dichte aus dem flüssigen Extraktionsmedium zu ermöglichen, wobei die Modifizierung der Polarität des Lösungsmittels eine Zugabe von H₂O und ein Einblasen von CO₂ in das flüssige Extraktionsmedium umfasst.

2. Verfahren nach Anspruch 1, das nach dem Abtrennen und Entfernen des Polyethylens niedriger Dichte aus dem flüssigen Extraktionsmedium das erneute Modifizieren der Polarität des Lösungsmittels umfasst, um zu bewirken, dass das Lösungsmittel wieder von der polaren und hydrophilen Form in die apolare und hydrophobe Form übergeht, um so das Lösungsmittel wieder für die Abtrennung von Polyethylen niedriger Dichte und Aluminium aus einem polylaminierten Material verwendbar zu machen, wobei das erneute Modifizieren der Polarität des Lösungsmittels das Rühren und Erhitzen des flüssigen Extraktionsmediums umfasst.

3. Verfahren nach Anspruch 1 oder 2, umfassend das Entfernen des abgetrennten Aluminiums und des abgetrennten Polyethylens niedriger Dichte aus dem flüssigen Extraktionsmedium.

4. Verfahren nach Anspruch 3, bei dem das Entfernen des abgetrennten Polyethylens niedriger Dichte das Filtern des flüssigen Extraktionsmediums umfasst.

5. Verfahren nach einem der Ansprüche 1 bis 4, umfassend das Erhitzen des flüssigen Extraktionsmediums, um das Polyethylen niedriger Dichte aufzuschließen.

6. Verfahren nach Anspruch 5, bei dem das Erhitzen bei einer Temperatur durchgeführt wird, die zwischen 90°C und 110°C liegt.

7. Verfahren nach Anspruch 5 oder 6, bei dem das Erhitzen 2 Stunden lang andauert.

8. Verfahren nach einem der Ansprüche 1 bis 7, bei dem das Einblasen von CO₂ eine Stunde lang fortgesetzt wird.

9. Verfahren nach einem der Ansprüche 1 bis 8, bei dem die Zugabe von H₂O so durchgeführt wird, dass das Volumenverhältnis zwischen dem N,N-Dimethylcyclohexylamin und dem H₂O 2:1 ist.

10. Verfahren nach einem der Ansprüche 3 bis 9, umfassend das Waschen des abgetrennten Aluminiums mit saurem H₂O, um Reste des Lösungsmittels zu entfernen.

11. Verfahren nach einem der Ansprüche 3 bis 10, umfassend das Waschen des abgetrennten Polyethylens niedriger Dichte mit saurem H₂O, um Reste des Lösungsmittels zu entfernen.

12. Verfahren nach Anspruch 10 oder 11, umfassend das Herstellen des sauren H₂O durch Einblasen von CO₂ in H₂O, bis ein pH-Wert von 5 erreicht ist.

13. Verfahren nach einem der Ansprüche 1 bis 12, bei dem das Modifizieren der Polarität des Lösungsmittels das Rühren des flüssigen Extraktionsmediums bei einer niedrigen Temperatur umfasst, wobei diese niedrige Temperatur zwischen 1°C und 2°C liegt.

14. Verfahren nach Anspruch 2 oder nach einem der Ansprüche 3 bis 13, soweit abhängig von Anspruch 2, bei dem bei der erneuten Modifizierung der Polarität das Erhitzen bei einer Temperatur zwischen 40°C und 50°C durchgeführt wird.

15. Verfahren nach einem der vorhergehenden Ansprüche, das ein Reduzieren der Fragmente des polylaminierten Materials vor dem Inkontaktbringen mit einem flüssigen Extraktionsmedium umfasst.

## Revendications

1. Procédé pour séparer et récupérer du polyéthylène basse densité et de l'aluminium à partir d'un matériau polystratifié, comprenant l'étape suivante :
- retrait d'une couche de papier à partir dudit matériau polystratifié ;
- mise dudit matériau polystratifié en contact avec un milieu d'extraction liquide comprenant un solvant qui est capable de passer réversiblement d'une forme polaire et hydrophile à une forme apolaire et hydrophobe, dans laquelle ledit solvant est la N,N-diméthylcyclohexylamine, ledit solvant étant initialement sous ladite forme apolaire et hydrophobe et étant capable de solubiliser ledit polyéthylène basse densité dans ledit milieu d'extraction liquide, de façon à séparer ledit polyéthylène basse densité et ledit aluminium l'un de l'autre ;
- modification de la polarité dudit solvant pour amener ledit solvant à passer de ladite forme apolaire et hydrophobe à ladite forme polaire et hydrophile, de façon à séparer ledit polyéthylène basse densité d'avec ledit milieu d'extraction liquide et à permettre audit polyéthylène basse densité d'être retiré dudit milieu d'extraction liquide, dans laquelle ladite modification de la polarité dudit solvant comprend l'addition de H₂O et le barbotage de CO₂ dans ledit milieu d'extraction liquide.

2. Procédé selon la revendication 1, comprenant, après la séparation et le retrait dudit polyéthylène basse densité à partir dudit milieu d'extraction liquide, la modification de nouveau de la polarité dudit solvant pour amener ledit solvant à passer de nouveau de ladite forme polaire et hydrophile à ladite forme apolaire et hydrophobe, de façon à rendre ledit solvant utilisable de nouveau pour séparer du polyéthylène basse densité et de l'aluminium d'avec un matériau polystratifié, dans lequel ladite modification de nouveau de la polarité dudit solvant comprend la soumission dudit milieu d'extraction liquide à une agitation et à un chauffage.

3. Procédé selon la revendication 1 ou 2, comprenant le retrait dudit aluminium séparé et dudit polyéthylène basse densité séparé hors dudit milieu d'extraction liquide.

4. Procédé selon la revendication 3, dans lequel le retrait dudit polyéthylène basse densité séparé comprend la filtration dudit milieu d'extraction liquide.

5. Procédé selon l'une quelconque des revendications 1 à 4, comprenant le chauffage dudit milieu d'extraction liquide afin de solubiliser ledit polyéthylène basse densité.

6. Procédé selon la revendication 5, dans lequel ledit chauffage est effectué à une température qui est comprise entre 90°C et 110°C.

7. Procédé selon la revendication 5 ou 6, dans lequel ledit chauffage se poursuit pendant 2 heures.

8. Procédé selon l'une quelconque des revendications 1 à 7, dans lequel ledit barbotage de CO₂ se poursuit pendant 1 heure.

9. Procédé selon l'une quelconque des revendications 1 à 8, dans lequel ladite addition de H₂O est effectuée de façon que le rapport en volume entre ladite N,N-diméthylcyclohexylamine et ledit H₂O soit de 2/1.

10. Procédé selon l'une quelconque des revendications 3 à 9, comprenant le lavage dudit aluminium séparé avec de la H₂O acide pour éliminer les résidus dudit solvant.

11. Procédé selon l'une quelconque des revendications 3 à 10, comprenant le lavage dudit polyéthylène basse densité séparé avec de la H₂O acide pour éliminer les résidus dudit solvant.

12. Procédé selon la revendication 10 ou 11, comprenant la préparation de ladite H₂O acide par barbotage de CO₂ dans la H₂O jusqu'à ce qu'un pH de 5 soit atteint.

13. Procédé selon l'une quelconque des revendications 1 à 12, dans lequel ladite modification de la polarité dudit solvant comprend la soumission dudit milieu d'extraction liquide à une agitation à basse température, ladite basse température étant comprise entre 1°C et 2°C.

14. Procédé selon la revendication 2, ou selon l'une quelconque des revendications 3 à 13 lorsqu'elles se rapportent à la revendication 2, dans lequel, dans la modification de nouveau de ladite polarité, ledit chauffage est effectué à une température qui est comprise entre 40°C et 50°C.

15. Procédé selon l'une quelconque des revendications précédentes, comprenant la réduction en fragments dudit matériau polystratifié avant ladite mise en contact avec un milieu d'extraction liquide.
